# EUROPÄISCHE PATENTSCHRIFT

(11) **EP 2 481 028 B1**
(45) Veröffentlichungstag und Bekanntmachung des Hinweises auf die Patenterteilung: **20.07.2022**
(21) Anmeldenummer: 10754950.3
(22) Anmeldetag: 21.09.2010
(51) Int. Cl.: G07D 9/00, B25J 19/02, B65G 47/90, B65H 5/00

(54) **BEHÄLTER UND SYSTEM FÜR DIE BEARBEITUNG VON BANKNOTEN**
CONTAINER AND SYSTEM FOR PROCESSING BANK NOTES
CONTENANT ET SYSTÈME DE TRAITEMENT DE BILLETS DE BANQUE

(30) Priorität: 24.09.2009 DE 102009042891
(43) Veröffentlichungstag der Anmeldung: 01.08.2012
(73) Patentinhaber: Giesecke+Devrient Currency Technology GmbH, 81677 München (DE)
(72) Erfinder: DEMMELER, Erwin, 87700 Memmingen (DE)
(74) Vertreter: Giesecke + Devrient IP
(86) Internationale Anmeldenummer: PCT/EP2010/063927
(87) Internationale Veröffentlichungsnummer: WO 2011/036157

(56) Entgegenhaltungen:
- EP-A1- 0 955 259
- EP-A2- 0 143 663
- WO-A1-2009/086583
- DE-A1- 10 133 235
- US-A1- 2004 067 127

## Beschreibung

Die vorliegende Erfindung betrifft einen Behälter und ein System für die Bearbeitung von Banknoten, die als getrennte Einheiten vorliegen.

Behälter und Systeme für die Bearbeitung von Banknoten, die als getrennte Einheiten vorliegen, sind bekannt. Unter getrennten Einheiten soll dabei eine Menge von mindestens einer Banknote oder mehr verstanden werden, die einer bestimmten Person, einem Konto, einer Abrechungseinheit usw. zugeordnet ist. Zudem können die Einheiten neben Banknoten auch Schecks, Gutscheine oder andere Wertdokumente umfassen. Beispielsweise können die getrennten Einheiten auch von getrennten Einzahlungen (Deposits) gebildet werden. Dabei werden die getrennten Einzahlungen vor der Bearbeitung mit einer Banknotenbearbeitungsmaschine für die anstehende Bearbeitung vorbereitet und in Behälter gefüllt. Dazu werden insbesondere Daten bzw. Informationen der Einzahlung erfasst und für die Bearbeitung der Banknotenbearbeitungsmaschine zur Verfügung gestellt. Die Daten können dabei Angaben über den Einzahler, eine Kontonummer, die Menge und den Wert der die Einzahlung bildenden Banknoten usw. umfassen. Um eine unterbrechungsfreie Bearbeitung durch die Banknotenbearbeitungsmaschine zu ermöglichen, werden die Einzahlungen voneinander durch Trennkarten getrennt, die zwischen verschiedene Einzahlungen eingefügt werden. Von der Banknotenbearbeitungsmaschine werden diese Trennkarten bei der Bearbeitung erkannt und damit auch der Anfang einer neuen Einzahlung.

Eine Einzahlung kann aus mehreren Untereinheiten (Sub-Deposits) bestehen. Eine Untereinheit kann beispielsweise die Tageseinnahmen einer einzelnen Ladenkasse in einer Geschäftsfiliale oder eines einzelnen Bankschalters in einer Bankfiliale enthalten. Solche Untereinheiten werden in der Regel von einer eindeutig verantwortlichen Kassenkraft zusammengestellt und beispielsweise durch Banderolen voneinander abgegrenzt. Die Banderolen sind hierbei in der Regel mit einer Information versehen, die den Verantwortlichen für die Zusammenstellung identifiziert, z.B. durch einen speziellen Stempel und/oder eine Unterschrift. Häufig ist die Banderole auch mit einer Information über den Einzahler, also dem Namen der Ladenkette oder der Bank versehen.

Die Trennung von Untereinheiten mit Banderolen wird häufig angewandt bei der Zusammenstellung von Banknoten mit einer vordefinierten Anzahl von Banknoten einer bestimmten Stückelung, z.B. ein Bündel von 100 Banknoten zu je 100 Euro, und damit einem festen Gesamtwert.

Eine weitere Möglichkeit zur Trennung von Untereinheiten besteht in der Verwendung von versiegelten Tüten, z.B. Safebags, oder verschlossenen Kuverts, die ebenfalls mit Informationen zum Einzahler und dem Verantwortlichen für die Zusammenstellung versehen sind.

Zur Vereinfachung der weiteren Bearbeitung werden die Untereinheiten einer Ladenkette oder einer Bank zu einer Einzahlung in einem Transportbehälter verpackt, der mit einem Einlieferungsbeleg über den Wert der Einzahlung einem Geldbearbeitungszentrum übergeben wird. Das Geldbearbeitungszentrum prüft, ob die Einzahlung den auf dem Einlieferungsbeleg genannten Wert enthält und veranlasst eine entsprechende Gutschrift auf das Konto des Einzahlers. Falls bei dieser Überprüfung eine Abweichung festgestellt wird oder eine gefälschte Banknote erkannt wird, muss jedoch der Verantwortliche für die Zusammenstellung der Untereinheit ermittelt werden, um ihn ggf. für die Abweichung haftbar zu machen oder als Zeugen für die Entgegennahme einer Fälschung zu befragen. Hierzu ist es notwendig, alle Informationen zu einer Untereinheit bis zum positiven Abschluss der Prüfung aufzubewahren und die zugehörigen Banknoten nicht mit anderen Banknoten zu vermischen, solange ihr Wert nicht eindeutig festgestellt und abgerechnet ist. Dabei kann die Trennung und Identifizierung der Untereinheiten ebenfalls mit Trennkarten erfolgen, die zwischen verschiedene Untereinheiten eingefügt werden.

Zur Verbesserung der Kontinuität der Bearbeitung von Einzahlungen bzw. der die Einzahlungen bildenden Banknoten werden, z. B. wie in DE 195 12 505 A1 beschrieben, Behälter, sogenannte Carrier, verwendet, in welche die Banknoten der verschiedenen Einzahlungen sowie die die Einzahlungen trennenden Trennkarten eingelegt werden, um sie der Banknotenbearbeitungsmaschine zuzuführen. In diesem Fall werden die Carrier, einer nach dem anderen, von einer Transporteinrichtung in den Bereich eines Vereinzelers der Banknotenbearbeitungsmaschine gebracht und von dem Vereinzeler einzeln aus dem Carrier für die Bearbeitung in der Banknotenbearbeitungsmaschine entnommen.

Es hat sich jedoch bei der Bearbeitung von Banknoten mittels der bekannten Vorrichtungen und Verfahren für die Bearbeitung von Banknoten, die als getrennte Einheiten vorliegen, herausgestellt, dass die verwendeten Carrier aufwendig und teuer in der Herstellung sind. Zudem können die verwendeten Carrier nur bedingt im Voraus vorbereitet und danach für die Bearbeitung in größerer Zahl bereitgehalten werden, da sie beispielsweise kaum gestapelt werden können, weshalb die Handhabung einer größeren Zahl von Carriern nicht platzsparend möglich ist.

Aus der WO 2009/086583 A1 sind Behälter für die Aufnahme von Banknoten bekannt, die jedoch nicht für eine kontinuierliche, automatische Bearbeitung geeignet sind.

Aufgabe der vorliegenden Erfindung ist es deshalb einen Behälter und ein System für die Bearbeitung von Banknoten, die als getrennte Einheiten vorliegen, anzugeben, die eine weitestgehend kontinuierliche Bearbeitung einer großen Anzahl von Einheiten dadurch ermöglichen, dass die große Anzahl von Einheiten beliebig vor der eigentlichen Bearbeitung vorbereitet werden kann. Dazu soll insbesondere ein geeigneter Behälter für die Aufnahme der Einheiten angegeben werden, der eine weitestgehende automatische Bearbeitung einer großen Anzahl von Einheiten und damit Banknoten erlaubt. Der Behälter soll zudem kostengünstig zu realisieren sein, eine gute ergonomisch Handhabung erlauben und auch bei nur teilweiser Befüllung mit Banknoten sicher bearbeitet werden können.

Diese Aufgabe wird erfindungsgemäß durch die Merkmale der unabhängigen Ansprüche gelöst.

Dabei wird von einem Behälter für die Bearbeitung von Banknoten, die insbesondere als getrennte Einheiten vorliegen, mit einem auf fünf Seiten geschlossenen Gehäuse, mit einer offenen Seite für die Aufnahme von auf ihren Längskanten stehenden Banknoten ausgegangen, wobei der Behälter Trennelemente aufweist und mittels der Trennelemente unterteilt ist und/oder variabel unterteilbar ist, und die Trennelemente mäanderförmig ausgeführt sind, so dass sie zu den zwischen ihnen gebildeten Zwischenräumen hin freie Aussparungen aufweisen, wobei auch am Ende und am Anfang des Behälters (1) gleichartige Trennelemente (3) angeordnet sind oder der Behälter an den zu den Trennelementen (3) parallelen Wänden kammartige Strukturen (5) aufweist, die zu dem mit dem nächsten Trennelement (3) gebildeten Zwischenraum hin freie Aussparungen aufweisen, wobei die zu den Zwischenräumen hin freien Aussparungen zum Eingreifen eines Greifers mit kammartiger Struktur angeordnet sind, um Banknoten aus einem Zwischenraum des Behälters zu entnehmen.

Der Vorteil der Erfindung ist insbesondere darin zu sehen, dass in den Zwischenräumen des Behälters aufbewahrte Banknoten über die freien Aussparungen ergriffen und aus dem Behälter entnommen werden können.

Bei einer Weiterbildung weisen Behälter und Trennelemente Einrichtungen zur Ermittlung der Position jedes Trennelements innerhalb des Behälters und des Vorhandesseins von Banknoten im Behälter auf. Vorteilhaft werden die Einrichtungen von reflektierendem Material und nichtreflektierendem Material gebildet. Dabei ist reflektierendes Material auf der innen liegenden Oberfläche des Bodens des Behälters angebracht, über die im Wesentlichen gesamte Länge der innen liegenden Oberfläche des Bodens des Behälters. Zudem weisen die Trennelemente nichtreflektierendes Material in mindestens einer freien Aussparung im Bereich des reflektierenden Materials des Behälters auf, sowie reflektierendes Material in mindestens einer freien Aussparung im Bereich außerhalb des reflektierenden Materials des Behälters.

Die Einrichtungen zur Ermittlung der Position jedes Trennelements innerhalb des Behälters und des Vorhandenseins von Banknoten erlauben die weitgehend automatische Bearbeitung der Behälter, da sie es ermöglichen, die Trennelemente innerhalb des Behälters zu lokalisieren und festzustellen, ob Banknoten in Zwischenräumen enthalten sind.

Bei dem System für die Bearbeitung von Banknoten, die insbesondere als getrennte Einheiten vorliegen, wird mindestens ein erfindungsgemäßer Behälter verwendet, der mittels eines Greifers für die Entnahme von in dem Behälter aufgenommenen Banknoten entleert wird, wobei der Greifer kammartige Strukturen aufweist, die in die zu den Zwischenräumen hin weisenden freie Aussparungen der Trennelemente eingreifen.

Mittels des auf den Behälter und dessen Trennelemente abgestimmten Greifers ist eine einfache und sichere Entnahme der im Behälter aufbewahrten Banknoten möglich.

Bei einer Weiterbildung des Systems ist es vorgesehen, dass der Greifer Sensoren für die Positionierung des Greifers über den Trennelementen aufweist, welche die Einrichtungen zur Ermittlung der Position jedes Trennelements des Behälters detektieren, insbesondere durch die Aussendung von Lichtstrahlen und der Detektion reflektierten Lichts.

Die Sensoren für die Positionierung erlauben es dem Greifer völlig selbständig zu arbeiten und die Banknoten aus dem Behälter zu entnehmen. Dadurch wird eine nahezu vollständige Automatisierung der Bearbeitung der Banknoten ermöglicht.

Bei einer weiteren Verbesserung des Systems ist ein Transportsystem für den Transport der mit Banknoten befüllten Behälter zum Greifer hin und für den Transport der entleerten Behälter vom Greifer weg vorgesehen.

Das verbesserte System ermöglicht die Bearbeitung großer Mengen von Banknoten, wobei die Banknoten für die Bearbeitung vorab vorbereitet und in die Behälter eingefüllt werden können. Die eigentliche Bearbeitung mittels einer Banknotenbearbeitungsmaschine kann dann völlig ohne Einschaltung einer Bedienperson erfolgen.

Besonders platzsparend kann das System aufgebaut werden, wenn das Transportsystem die Banknotenbearbeitungsmaschine im Sockelbereich kreuzt.

Weitere Vorteile der vorliegenden Erfindung ergeben sich aus den abhängigen Ansprüchen sowie der nachfolgenden Beschreibung von Ausführungsformen anhand von Figuren.

Es zeigt:
- Figur 1: einen Behälter für die Bearbeitung von Banknoten, die als getrennte Einheiten vorliegen,
- Figur 2: einen für den in Figur 1 dargestellten Behälter geeigneten Greifer,
- Figur 3: einen Ausschnitt aus dem in Figur 1 dargestellten Behälter,
- Figur 4: den in Figur 1 dargestellten, teilweise mit Banknoten gefüllten Behälter zusammen mit dem Greifer aus Figur 2,
- Figur 5: mehrere Schritte zur Entnahme von Banknoten aus dem in Figur 4 dargestellten Behälter mittels des Greifers, und
- Figur 6: verschiedene Ansichten eines Systems zur Bearbeitung von Banknoten.

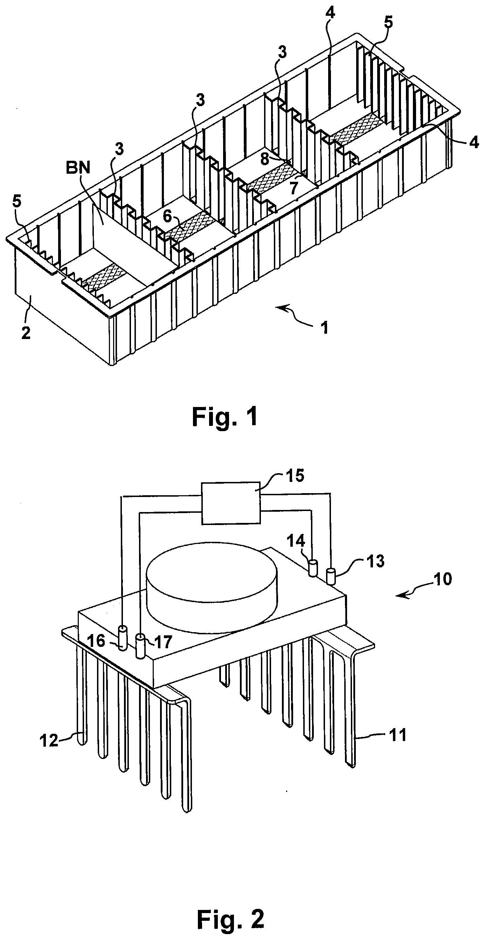

Figur 1 zeigt einen Behälter 1 für die Bearbeitung von Banknoten, die als getrennte Einheiten vorliegen.

Der Behälter 1 wird von einem auf einem auf fünf Seiten geschlossenen Gehäuse 2 gebildet, das mehrere Unterteilungen 4 aufweist, welche Trennelemente 3 austauschbar aufnehmen können. Die Unterteilungen 4 können definierte Abstände zueinander aufweisen. Es kann auch vorgesehen sein, dass feststehende Trennelemente 3 mit vorgegebenen Abständen in dem Behälter 1 angebracht sind. Zwischen den Trennelementen 3 können zu bearbeitende Banknoten BN eingegeben werden. Die Banknoten BN werden dabei derart eingegeben, dass sie auf ihren Längskanten stehend im Behälter 1 aufbewahrt werden. Dadurch wird es ermöglicht, dass die Banknoten BN beim Eingeben an ihren Längskanten gefasst werden können, wodurch ein sicheres und ergonomisch günstiges Befüllen des Behälters ermöglicht wird.

Figur 2 zeigt einen für den in Figur 1 dargestellten Behälter 1 geeigneten Greifer 10. Der Greifer 10 weist rechenartige Elemente 11 und 12 auf, die die aufeinander zu und voneinander wegbewegt werden können. Um im Behälter befindliche Banknoten sicher ergreifen zu können, ist es vorteilhaft, die rechenartigen Elemente 11, 12 so zu gestalten, dass sie sich im Wesentlichen über die gesamte lichte Weite des Behälters 1 erstrecken. Zusätzlich weist der Greifer 10 Sensoren 13,14,16, 17 für die Positionierung des Greifers 10 auf, deren Signale von einer den Greifer steuernden Steuereinrichtung 15 ausgewertet werden.

Die Trennelemente 3 innerhalb des Behälters 1 sind erforderlich, damit der Greifer 10 definiert zwischen im Behälter 1 befindliche Banknoten eintauchen und Bündel von Banknoten definiert greifen und aus dem Behälter 1 entnehmen kann. Die Trennelemente 3 können dabei auch für die Abgrenzung der oben beschriebenen einzelnen Einheiten von Banknoten, wie z. B. Einzahlungen, verwendet werden.

Für den Greifer 10 kann eine maximale Greifweite vorgegeben sein, um die Banknoten sicher greifen zu können. Diese maximale Greifweite kann beispielsweise 100 bis 140 mm betragen. In diesem Fall ist es vorteilhaft, die oben beschriebenen feststehenden Trennelemente 3 zu verwenden, wobei die vorgegebenen Abstände der Trennelemente 3 innerhalb des Behälters 1 durch die maximale Greifweite festgelegt sind.

Die Trennelemente 3 müssen ein Eintauchen der Greiferfinger der rechenartigen Elemente 11 und 12 in den Behälter 1 ermöglichen, wobei auch direkt an den Trennelementen 3 anliegende Banknoten sicher vom Greifer 3 erfasst und gehalten werden können müssen.

Beispielhaft werden die Trennelemente 3 mäanderförmig ausgeführt, insgesamt ist dabei zu berücksichtigen, dass die Trennelemente 3 möglichst wenig Platz innerhalb des Behälters 1 beanspruchen, um eine möglichst große Zahl von Banknoten aufnehmen zu können. Selbstverständlich müssen die Greiferfinger des Greifers 10 entsprechend der Trennelemente 3 gestaltet sein. Gleichartige Trennelemente 3 können auch am Ende und Anfang des Behälters 1 angeordnet sein, es ist aber auch möglich, eine kammartige Struktur 5 am Ende und Anfang des Behälters 1 vorzusehen, welche ebenfalls das Eintauchen der Greiferfinger der rechenartigen Elemente 11 und 12 in den Behälter 1 ermöglichen können.

Werden die Trennelemente 3, wie zuvor beschrieben, auch zur Trennung von einzelnen Einheiten von Banknoten verwendet, kann bei Einheiten, die nur aus wenigen Banknoten bestehen, das Problem auftreten, dass der Zwischenraum zwischen zwei feststehenden Trennelementen 3 nur unvollständig ausgefüllt ist. Damit die Banknoten BN auch in diesem Fall definiert stehend auf ihren Längskanten im Behälter aufbewahrt werden können, ist die Verwendung von zusätzlichen Trennelementen erforderlich, die variabel in relativ geringen Abständen zueinander oder zu den feststehenden vorhandenen Trennelementen 3 einstecken zu können. Dazu können die oben beschriebenen Unterteilungen 4 verwendet werden. Ein geeigneter Rasterabstand kann etwa 25 bis 35 mm betragen. Generell richtet sich der Rasterabstand nach den zu bearbeitenden Banknoten, d. h. der Breite der kleinsten Banknote, und sollte nicht größer als die Hälfte der kleinsten Breite sein. Dadurch lassen sich auch sehr wenige Banknoten, wie vorgesehen, auf ihrer Längskante stehend im Behälter 1 aufbewahren. Ein Umfallen und flach Liegen der Banknoten auf dem Boden des Behälters 1 kann dadurch vermieden werden. Statt der Verwendung eines vorgegebenen Rasterabstands für die Unterteilungen 4 bzw. feststehender Trennelemente 3 kann es auch vorgesehen sein, dass die Trennelemente 3 mit beliebigen Abständen zueinander angeordnet werden können. Dazu können die Trennelemente beispielsweise teleskopartig ausgebildet und mit einer Federkraft beaufschlagt sein, so dass die Trennelemente an beliebiger Stelle zwischen die Außenwände des Behälters geklemmt werden können.

Selbstverständlich können auch die eingangs beschriebenen Trennkarten für die Trennung verschiedener Einheiten von Banknoten verwendet werden. In diesem Fall können mehrere Einheiten von Banknoten zwischen zwei Trennelementen 3 eingegeben werden. Ebenso können aus besonders vielen Banknoten bestehende Einheiten von Banknoten auf mehr als einen Zwischenraum aufgeteilt werden.

Zur sicheren Positionierung des Greifers 10 für die Entnahme von Banknoten aus dem Behälter 1, werden die oben bereits erwähnten Sensoren 13,14,16, 17 verwendet, um die Position der Trennelemente 3 innerhalb des Behälters zu ermitteln. Unter Umständen kann auf diese Sensoren auch verzichtet werden, falls nur Trennelemente 3 mit fest vorgegebenen Abständen verwendet werden. In diesem Fall kann der Greifer 10 durch die Steuereinrichtung an die bekannten Positionen der Trennelemente 3 bewegt werden. Die Sensoren 13, 14, 16, 17 des Greifers 10 können beispielsweise von Lichttastern gebildet werden, die einen Lichtstrahl aussenden und detektieren, ob Lichtstrahl reflektiert wird.

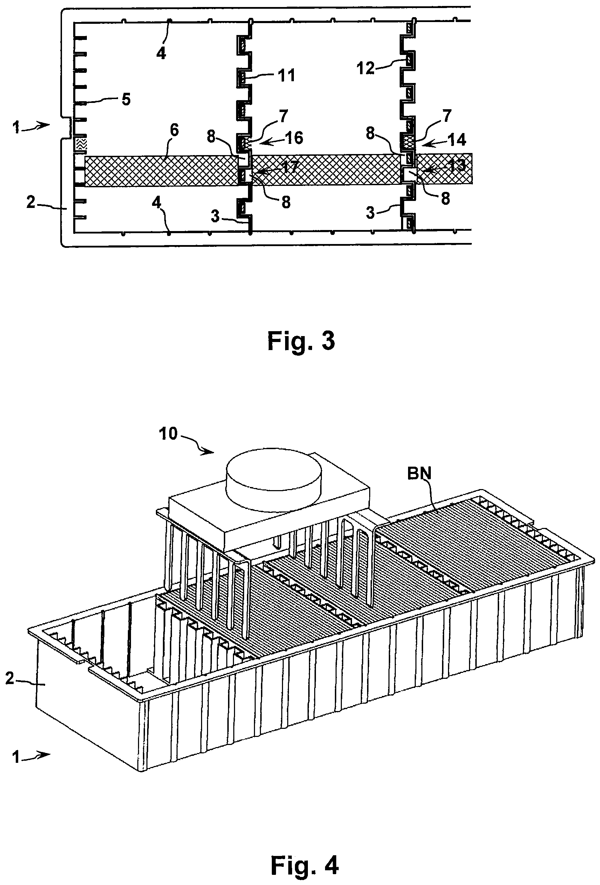

Wie in den Figuren 1 und 3 zu sehen, ist im Behälter 1 ein reflektierender Bereich 6 am Behälterboden angeordnet, der sich über die Längsrichtung des Behälters 1 erstreckt. In einer Aussparung der Trennelemente 3 ist außerhalb des reflektierenden Bereichs 6 am Behälterboden ein reflektierender Bereich 7 angeordnet. In mindestens einer anderen Aussparung der Trennelemente 3 Bereich ist innerhalb des reflektierenden Bereichs 6 am Behälterboden ein nichtreflektierender Bereich 8 angeordnet. Die reflektierenden Bereiche 6 und 7 können beispielsweise von Reflektorfolien gebildet werden. Der nichtreflektierende Bereich 8 kann beispielsweise eine matte Oberfläche sein.

Bei einer Bewegung des Greifers 10 in Längsrichtung über den Behälter 1 detektieren die im reflektierenden Bereich 6 am Behälterbodens angeordneten ersten Sensoren 13, 17, ob der reflektierende Bereich 6 am Behälterboden verdeckt oder frei ist. Ist der Behälterboden frei, wird der ausgesendete Lichtstrahl reflektiert. Ist der Behälterboden nicht frei, wird der ausgesendete Lichtstrahl nicht reflektiert. Dies kann darauf hindeuten, dass sich Banknoten in dem Behälter befinden, oder dass ein Trennelement 3 vorhanden ist, dessen nichtreflektierender Bereich 8 den reflektierenden Bereich 6 am Behälterboden verdeckt. Gleichzeitig detektieren die zweiten Sensoren 14, 16 den ausgesendeten Lichtstrahl nur beim Vorhandensein von Trennelementen 3 bzw. deren reflektierender Bereiche 7. Bei der Auswertung der Signale der Sensoren 13, 14, 16, 17 durch die Steuereinrichtung 15 kann somit auf die Anwesenheit von Banknoten geschlossen werden, falls sowohl die ersten Sensoren 13, 17 als auch die zweiten Sensoren 14, 16 keine Lichtreflexion detektieren. Detektieren nur die zweiten Sensoren 14, 16 eine Lichtreflexion, die ersten Sensoren 13, 17 dagegen nicht, liegt ein Trennelement 3 vor. Schließlich kann auf einen leeren Zwischenraum geschlossen werden, falls nur die ersten Sensoren 13,17 eine Lichtreflexion detektieren, die zweiten Sensoren 14,16 dagegen nicht. Somit kann die Steuereinrichtung die Position der Trennelemente 3 ermitteln und den Greifer 10 entsprechend für die Entnahme von Banknoten aus dem Behälter 1 positionieren.

Da der Greifer längs über den Behälter bewegt wird, kann auf eines der Sensorpaare 13, 14 oder 16, 17 auch verzichtet werden. In diesem Fall wird das in Bewegungsrichtung des Greifers 10 vorn liegende Sensorpaar verwendet.

Zur einfachen und ergonomischen Handhabung sollte der Behälter 1 kostengünstig und möglichst leicht sein. Eine Herstellung aus Kunststoff, insbesondere Spritzguss, ist vorteilhaft. Entsprechende gestalterische Merkmale, z. B. die dargestellten Ränder, können die Handhabung erleichtern, da der Behälter 1 an den Rändern einfach ergriffen werden kann. Zusätzlich kann ein Deckel für den Behälter 1 vorgesehen werden, um die Öffnung des Behälters abdecken zu können. Der Deckel kann auch verschließbar sein.

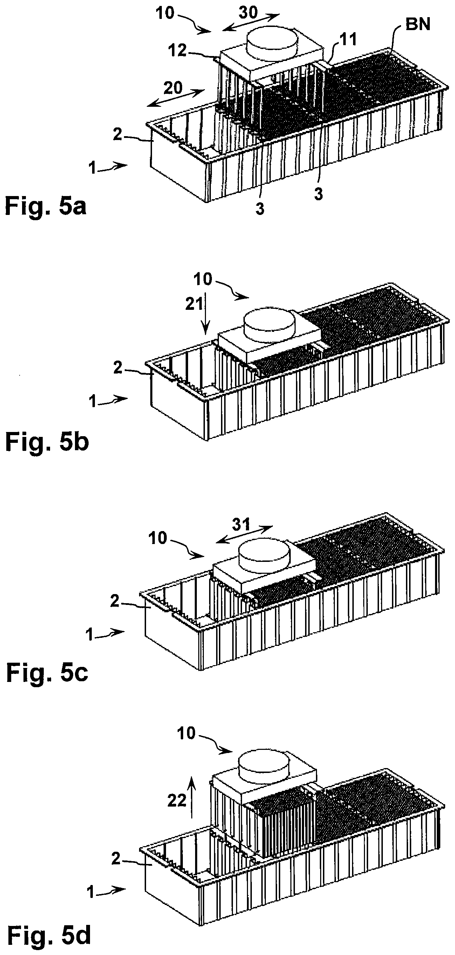

Figur 4 zeigt einen teilweise mit Banknoten gefüllten Behälter 1 zusammen mit Greifer 10. In den Figuren 5a bis 5d wird die Entnahme von Banknoten aus dem in Figur 4 dargestellten Behälter 1 mittels des Greifers 10 gezeigt.

Wie in Figur 5a dargestellt, wird der Greifer 10, von links kommend, über den Behälter 1 geführt. Wie oben beschrieben, ermittelt die Steuereinrichtung 15 aus den Signalen der Sensoren 13,14 und/oder 16, 17 die Anwesenheit von Banknoten BN sowie die Position von Trennelementen 3 und positioniert den Greifer 10. Da der von links gesehen erste Zwischenraum keine Banknoten enthält, wird der Greifer 10 entlang seines Verfahrwegs 20 bewegt, bis die Banknoten im zweiten Zwischenraum erkannt und die Positionen der den zweiten Zwischenraum einschließenden Trennelemente 3 ermittelt ist. Anschließend oder gleichzeitig bewegt 30 der Greifer 10 die rechenartigen Elemente 11 und 12, an die für die Trennelemente 3 festgestellten Positionen.

Wie in Figur 5b dargestellt, wird der Greifer 10 anschließend in den Behälter 1 abgesenkt 21, um die im Zwischenraum befindlichen Banknoten ergreifen zu können. Die rechenartigen Elemente 11 und 12 des Greifers 10 greifen dabei in die Aussparungen der Trennelemente 3, die zum zwischen den Trennelementen 3 liegenden Zwischenraum offen sind (Figur 3).

Wie in Figur 5c dargestellt, werden die rechenartigen Elemente 11 und 12 des Greifers 10 danach aufeinander zu bewegt 31, um die im Zwischenraum befindlichen Banknoten einzuklemmen und somit zu erfassen.

Wie in Figur 5d dargestellt, werden die zwischen den rechenartigen Elemente 11 und 12 des Greifers 10 geklemmten Banknoten anschließend vom Greifer 10 aus dem Behälter 1 entnommen.

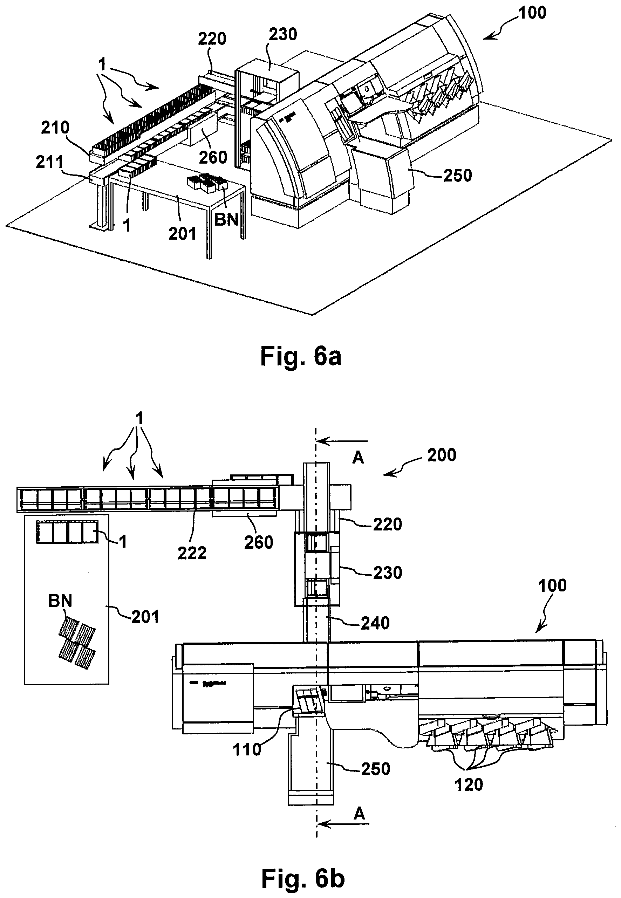

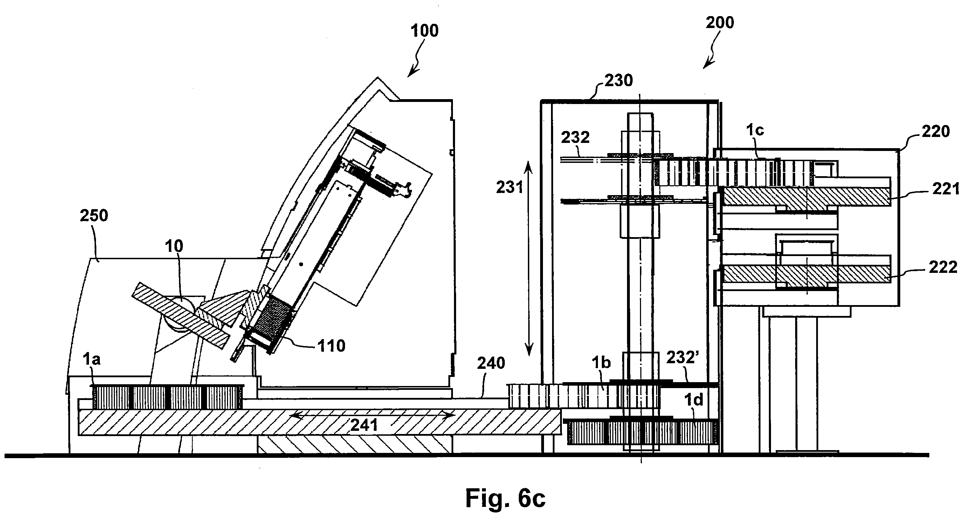

Die aus dem Behälter 1 vom Greifer 10 entnommenen Banknoten werden anschließend einer Bearbeitung, beispielsweise mittels einer Banknotenbearbeitungsmaschine zugeführt. Dazu werden die Banknoten vom Greifer 10 in einen Vereinzeler der Banknotenbearbeitungsmaschine eingelegt. Eine derartige Banknotenbearbeitungsmaschine sowie der zugehörige Vereinzeler werden beispielsweise in der eingangs erwähnten DE 195 12 505 A1 oder der DE 10 2007 043 130 A1 beschrieben. Es ist offensichtlich, dass der Greifer 10 im Bereich des Vereinzelers der Banknotenbearbeitungsmaschine angeordnet sein muss, um die aus dem Behälter 1 entnommenen Banknoten in ein Eingabefach des Vereinzelers einlegen zu können. Ebenso ist es offensichtlich, dass im Bereich des Greifers 10 eine geeignete Aufnahmevorrichtung für einen oder mehrere Behälter 1 vorgesehen sein muss, damit eine Bedienperson die mit Banknoten gefüllten Behälter 1 zur Bearbeitung der Banknoten der Aufnahmevorrichtung zuführen kann. Eine beispielhafte Ausführung der Anordnung eines Greifers 10 im Bereich des Vereinzelers sowie einer Aufnahmevorrichtung kann Figur 6 mit zugehöriger Beschreibung entnommen werden, in der eine automatisierte Zuführung von Behältern 1 zu einer Banknotenbearbeitungsmaschine dargestellt und beschrieben ist.

In den Figuren 6a, 6b und 6c ist ein System zur Bearbeitung von Banknoten aus verschiedenen Ansichten dargestellt. Figur 6a zeigt eine räumliche Ansicht des Systems. Figur 6b zeigt eine Sicht auf das System von oben. Figur 6c zeigt einen Schnitt durch das System entlang einer Line AA gemäß Figur 6b.

Das System weist in der dargestellten beispielhaften Ausführungsform mindestens einen Behälter 1, eine Banknotenbearbeitungsmaschine 100 und ein Transportsystem 200 für die Zuführung des oder der Behälter 1 zu der Banknotenbearbeitungsmaschine 100 auf.

Zur Vorbereitung der Bearbeitung von Banknoten BN, die beispielsweise als getrennte Einheiten vorliegen können, wird beispielsweise eine Arbeitsfläche 201 verwendet, z. B. ein Tisch. Die Banknoten BN bzw. die getrennten Einheiten werden, wie oben beschrieben, von einer Bedienperson in einen oder mehrere Zwischenräume in einen oder mehrere Behälter 1 derart eingegeben, dass die Banknoten auf einer ihrer Längskanten stehen.

Bei der Befüllung der Behälter 1 durch die Bedienperson kann es vorgesehen sein, dass die Bedienperson die Einheiten kennzeichnende Informationen erfasst und für die weitere Bearbeitung durch die Banknotenbearbeitungsmaschine 100 zur Verfügung stellt. Beispielsweise können die oben erwähnten Informationen wie Name eines Einzahlers, Kontonummer usw. für jede Einheit erfasst und zur Verfügung gestellt werden. Die Erfassung der Informationen kann mittels geeigneter Leseeinrichtungen erfolgen, z. B. kann ein Barcodeleser verwendet werden, falls die Informationen entsprechend codiert vorliegen. Die Informationen können aber auch von der Bedienperson eingegeben werden, z. B. mittels einer Tastatur oder eines Touchscreens. Die derart erfassten Informationen werden dem jeweiligen Behälter 1 zugeordnet. Dazu können die Behälter beispielsweise eine eindeutige Identifizierung aufweisen. Dieser eindeutigen Identifizierung werden dann die erfassten Informationen über die im jeweiligen Behälter 1 befindlichen Banknoten bzw. Einheiten von Banknoten zugeordnet. Beispielsweise können auch Angaben darüber enthalten sein, in welchem der Zwischenräume des jeweiligen Behälters sich eine oder mehrere bestimmte Einheiten befinden. Die erfassten Informationen sowie die eindeutige Identifizierung des jeweiligen Behälters 1 können an eine Steuereinrichtung der Banknotenbearbeitungsmaschine 100 übertragen und dort gespeichert werden, damit der Banknotenbearbeitungsmaschine 100 bei der späteren Bearbeitung der die Einheiten bildenden Banknoten eine Verrechung für die Einheiten vornehmen kann. Alternativ oder zusätzlich können die erfassten Informationen in einem Speicher gespeichert werden, der mit dem jeweiligen Behälter 1 verbunden ist. Der Speicher kann beispielsweise in RFID-Technologie realisiert sein, so dass die Informationen bei der Vorbereitung durch die Bedienperson kontaktlos in den Speicher geschrieben werden und bei der Bearbeitung in der Banknotenbearbeitungsmaschine 100 kontaktlos aus dem Speicher gelesen werden kann. Weitere Informationen für die Bearbeitung der Banknoten bzw. Einheiten können durch die Verwendung der oben beschriebenen Trennkarten zur Verfügung gestellt werden.

Die mit Banknoten bzw. Einheiten gefüllten Behälter 1 werden von der Bedienperson einem ersten Transportpfad 211 des Transportsystems 200 zugeführt. Die vorbereiteten Behälter 1 können aber auch vor einer Bearbeitung zwischengespeichert und an beliebiger Stelle gestapelt oder in verschließbaren Containern gelagert werden.

Im Transportsystem 200, z. B. im Bereich des ersten Transportpfads 211 kann eine Rüttelstation 260 angeordnet sein, die beispielsweise mittels Unwuchtmotoren Vibrationen erzeugt. Diese Vibrationen wirken auf die transportieren Behälter 1, um die darin befindlichen Banknoten auszurichten. Insbesondere im Multistückelungsbetrieb mit verschieden breiten Stückelungen ist es oft zu beobachten, dass einzelne Banknoten, besonderes die Banknoten der schmalen Stückelungen, nicht ausreichend ausgerichtet sind, d. h. nicht mit einer ihrer Längskanten am Boden der Behälter 1 aufliegen. Nach der Vereinzelung kann dies zu einem fehlerhaften Transport der einzelnen Banknoten führen. Dadurch werden beispielsweise Probleme bei der Bearbeitung in der Banknotenbearbeitungsmaschine verursacht. Durch Rütteln der Behälter in der Rüttelstation 260 kann erreicht werden, dass auch schmalere Banknoten mit einer ihrer Längskanten den Boden der Behälter 1 berühren. Wird der Behälter 1 schräg in der Rüttelstation 260 gehalten, kann zusätzlich eine Ausrichtung an einer kurzen Kante der Banknoten erfolgen.

Der erste Transportpfad 211 transportiert die Behälter 1 zu einem zweiten Transportpfad 220, welcher die Behälter 1 mittels einer Dreheinrichtung 222 um 90° dreht und an einen dritten Transportpfad 230 übergibt. Bei einer anderen, linearen Anordnung des Transportsystems kann selbstverständlich auf den zweiten Transportpfad 220 verzichtet werden.

Der dritte Transportpfad 230 kann mehrere Behälter 1 aufnehmen und so zusätzlich auch als Zwischenspeicher für mit Banknoten gefüllte Behälter 1d dienen. Der dritte Transportpfad 230 weist ein Aufzugsystem 232 auf, mit dem die Behälter vertikal 231 bewegt werden können. Zur Verdeutlichdung ist das Aufzugsystem 232 in Figur 6c zusätzlich in einer zweiten Position 232' dargestellt. Die vom ersten Transportpfad 211 kommenden und von der Dreheinrichtung 222 des zweiten Transportpfads 220 gedrehten Behälter 1 mit Banknoten werden vom Aufzugsystem 232 des dritten Transportpfads 230 an einen vierten Transportpfad 240 übergeben.

Der vierte Transportpfad 240 transportiert 241 den Behälter 1a in den Bereich des Greifers 10, der in einem an die Banknotenbearbeitungsmaschine 100 und dessen Vereinzeler 110 angrenzenden Gehäuse 250 untergebracht ist. Bevorzugt kreuzt der vierte Transportpfad 240 die Banknotenbearbeitungsmaschine 100 im Sockelbereich. Dadurch wird der Aufbau des Gesamtsystems besonders effizient. Im Bereich des Greifers 10 kann zudem eine Leseeinrichtung angeordnet sein, welche die eindeutige Identifikation des Behälters 1a liest, um so die dem Behälter 1a zugeordneten Informationen über die Einheiten für deren Bearbeitung verfügbar zu machen. Falls die Behälter 1 den oben beschriebenen Speicher aufweisen, ist die Leseeinrichtung geeignet, die gespeicherten Informationen aus dem Speicher zu lesen.

Der Greifer 10 entnimmt Banknoten aus dem Behälter 1a und legt diese in das Eingabefach des Vereinzelers 110. Anschließend werden die Banknoten in der Banknotenbearbeitungsmaschine 100 unter Verwendung der Informationen bearbeitet und abgerechnet. Die bearbeiteten Banknoten werden in Ausgabefächern 120 der Banknotenbearbeitungsmaschine 100 abgelegt.

Nachdem der Greifer 10 alle Banknoten aus dem Behälter 1a entnommen hat, wird der leere Behälter 1a vom vierten Transportpfad 240 zum dritten Transportpfad 230 transportiert 241. Dort wird der leere Behälter 1b vom (in der zweiten Position dargestellten) Aufzugsystem 232' vertikal transportiert 231. Hat das Aufzugsystem 232 die dargestellte erste Position erreicht, wird der leere Behälter 1c an eine Dreheinrichtung 221 des zweiten Transportpfads 220 übergeben und um 90° gedreht an einen fünften Transportpfad 210 übergeben. Der fünfte Transportpfad 210 transportiert den leeren Behälter 1 in den Bereich der Arbeitsfläche 201. Der leere Behälter 1 steht damit der Bedienperson für eine erneute Befüllung mit Banknoten zur Verfügung.

Wie zuvor beschrieben, kann der dritte Transportpfad 230 mehrere Behälter 1 aufnehmen und so zusätzlich auch als Zwischenspeicher für mit Banknoten gefüllte Behälter 1d dienen. Besonders vorteilhaft kann dies umgesetzt werden, wenn das Aufzugsystem 232 zwei oder mehr Aufnahmeeinrichtungen für Behälter 1 aufweist, Dies ist der in Figur 6c dargestellten zweiten Position des Aufzugssystems 232' zu entnehmen. Dort wird der leere Behälter 1b von der ersten Aufnahmeeinrichtung des Aufzugsystems 232' übernommen, während sind in der zweite Aufnahmeeinrichtung des Aufzugsystems 232' ein gefüllter Behälter 1d befindet. Zur Beschleunigung der Bearbeitung wird, nachdem der leere Behälter 1b aufgenommen ist von der ersten Aufnahmeeinrichtung des Aufzugssystems 232' übernommen ist, der gefüllte Behälter 1d an den vierten Transportpfad 240 übergeben. Danach wird der leere Behälter 1b, wie zuvor beschrieben, zum fünften Transportpfad 210 transportiert, um erneut der Bedienperson zur Verfügung zu stehen. Anschließend kann ein neuer gefüllter Behälter von der zweiten Aufnahmevorrichtung übernommen werden und von dem Aufzugsystem 232' wieder in die in der Figur 6c dargestellte zweite Position verbracht werden.

Durch den automatischen Wechsel der Behälter und deren Entleerung durch den Greifer wird durch das System ein großer Puffer an zu bearbeitenden Einheiten bzw. Banknoten zur Verfügung gestellt, der ohne manuellen Eingriff bearbeitet werden kann.

Eine weitere Automatisierung kann erreicht werden, falls auch für die Befüllung der Behälter 1 im Bereich der Arbeitsfläche 201 ein Greifer eingesetzt wird bzw. wenn die Arbeitsfläche 201 durch eine entsprechend automatisierte Eingabe ergänzt oder ersetzt wird.

Die bisher beschriebenen Behälter 1 sind dazu geeignet Banknoten in einer Reihe aufzunehmen. Es ist offensichtlich, dass auch Behälter verwendet werden können, bei denen die Banknoten in der beschriebnen Weise in mehreren Reihen nebeneinander eingegeben werden können.

## Patentansprüche

1. Behälter für die Bearbeitung von Banknoten, die insbesondere als getrennte Einheiten vorliegen, mit einem auf fünf Seiten geschlossenen Gehäuse (2), mit einer offenen Seite, für die Aufnahme von auf ihren Längskanten stehenden Banknoten, **dadurch gekennzeichnet, dass** der Behälter (1) Trennelemente (3) aufweist und mittels der Trennelemente (3) unterteilt ist und/oder variabel unterteilbar ist, wobei die Trennelemente (3) mäanderförmig ausgeführt sind, so dass sie zu den zwischen ihnen gebildeten Zwischenräumen hin freie Aussparungen aufweisen, wobei auch am Ende und am Anfang des Behälters (1) gleichartige Trennelemente (3) angeordnet sind oder der Behälter an den zu den Trennelementen (3) parallelen Wänden kammartige Strukturen (5) aufweist, die zu dem mit dem nächsten Trennelement (3) gebildeten Zwischenraum hin freie Aussparungen aufweisen, wobei die zu den Zwischenräumen hin freien Aussparungen zum Eingreifen eines Greifers mit kammartiger Struktur angeordnet sind, um Banknoten aus einem Zwischenraum des Behälters zu entnehmen.

2. Behälter nach Anspruch 1, **dadurch gekennzeichnet, dass** der Behälter (1) Unterteilungen (4) für die Aufnahme von Trennelementen (3) aufweist.

3. Behälter nach Anspruch 1 oder 2, **dadurch gekennzeichnet, dass** der Behälter (1) und die Trennelemente (3) Einrichtungen (6, 7, 8) zur Ermittlung der Position jedes Trennelements (3) innerhalb des Behälters (1) und des Vorhandesseins von Banknoten im Behälter (1) aufweisen.

4. Behälter nach Anspruch 3, **dadurch gekennzeichnet, dass** Einrichtungen (6, 7, 8) zur Ermittlung der Position jedes Trennelements (3) innerhalb des Behälters (1) und des Vorhandesseins von Banknoten im Behälter (1) von reflektierendem Material (6, 7) und nichtreflektierendem Material (8) gebildet werden, wobei reflektierendes Material auf der innen liegenden Oberfläche des Bodens des Behälters (1) sich über die im Wesentlichen gesamte Länge der innen liegenden Oberfläche des Bodens des Behälters (1) erstreckt, und die Trennelemente (3) nichtreflektierendes Material (8) in mindestens einer freien Aussparung im Bereich des reflektierenden Materials (6) des Behälters (1) aufweisen, sowie reflektierendes Material (7) in mindestens einer freien Aussparung im Bereich außerhalb des reflektierenden Materials (6) des Behälters (1).

5. Behälter nach einem der Ansprüche 1 bis 4, **dadurch gekennzeichnet, dass** der Behälter (1) und/oder das Trennelement (3) aus Kunststoff bestehen und mittels Spritzguss hergestellt werden.

6. System für die Bearbeitung von Banknoten, die insbesondere als getrennte Einheiten vorliegen, mit mindestens einem Behälter (1) nach einem der Ansprüche 1 bis 5, **gekennzeichnet durch** einen Greifer (10) für die Entnahme von in dem Behälter (1) aufgenommenen Banknoten, wobei der Greifer kammartige Strukturen (11, 12) aufweist, die in die zu den Zwischenräumen hin weisenden freien Aussparungen der Trennelemente (3) und/oder kammartigen Strukturen (5) am Ende und Anfang des Behälters (1) eingreifen.

7. System nach Anspruch 6, **dadurch gekennzeichnet, dass** der Greifer (10) Sensoren (13, 14) für die Positionierung des Greifers (10) über den Trennelementen (10) aufweist, zur Detektion der Einrichtungen (6, 7, 8) zur Ermittlung der Position jedes Trennelements (3) des Behälters (1).

8. System nach Anspruch 7, **dadurch gekennzeichnet, dass** die Sensoren (13, 14) einen Lichtstrahl aussenden und reflektiertes Licht detektieren.

9. System nach einem der Ansprüche 6 bis 8, **dadurch gekennzeichnet, dass** das System eine Banknotenbearbeitungsmaschine (100) mit einem Vereinzeler (110) aufweist, wobei der Greifer (10) aus dem Behälter (1) entnommene Banknoten in ein Eingabefach des Vereinzelers (110) einlegt.

10. System nach Anspruch 9, **dadurch gekennzeichnet, dass** ein Transportsystem (200) mit Banknoten befüllte Behälter (1) zum Greifer (10) transportiert und die Behälter (1) nach der Entleerung durch den Greifer (10) vom Greifer (10) weg.

11. System nach Anspruch 10, **dadurch gekennzeichnet, dass** das Transportsystem (200) die Banknotenbearbeitungsmaschine (100) im Sockelbereich kreuzt.

12. System nach Anspruch 10 oder 11, **dadurch gekennzeichnet, dass** das Transportsystem (200) eine Rüttelstation (260) aufweist, um die mit Banknoten befüllten Behälter (1) zu rütteln, damit alle Banknoten in dem Behälter (1) mit einer ihrer Längskanten auf dem Boden des Behälters (1) aufliegen.

## Claims

1. A container for processing bank notes, which are in particular in the form of separate units, having a housing (2), which is closed on five sides, with an open side, for receiving bank notes standing on their longitudinal edges, **characterized in that** the container (1) has separating elements (3) and is subdivided by means of the separating elements (3) and/or can be subdivided in a variable manner, wherein the separating elements (3) are configured in a meandering way so that they have free recesses toward the interstices formed between them, wherein separating elements (3) of the same kind are arranged also at the end and at the beginning of the container (1) or the container has comb-like structures (5) on the walls parallel to the separating elements (3), which have free recesses toward the interstice formed with the next separating element (3), wherein the recesses, which are free toward the interstices, are arranged to engage a gripper having a comb-like structure to remove bank notes from an interstice of the container.

2. The container according to claim 1, **characterized in that** the container (1) has subdivisions (4) for receiving separating elements (3).

3. The container according to claim 1 or 2, **characterized in that** the container (1) and the separating elements (3) have means (6, 7, 8) for determining the location of each separating element (3) within the container (1) and the presence of bank notes in the container (1).

4. The container according to claim 3, **characterized in that** means (6, 7, 8) for determining the location of each separating element (3) within the container (1) and the presence of bank notes in the container (1) are formed from reflecting material (6, 7) and non-reflecting material (8), wherein reflective material on the interior surface of the bottom of the container (1) extends over substantially the entire length of the interior surface of the bottom of the container (1), and the separating elements (3) have non-reflective material (8) in at least one free recess in the region of the reflective material (6) of the container (1), and have reflective material (7) in at least one free recess in the region outside the reflective material (6) of the container (1).

5. The container according to any of claims 1 to 4, **characterized in that** the container (1) and/or the separating element (3) consist of plastic and are produced by means of injection molding.

6. A system for processing bank notes, which are in particular in the form of separate units, having at least one container (1) according to any of claims 1 to 5, **characterized by** a gripper (10) for removing bank notes received in the container (1), wherein the gripper has comb-like structures (11, 12) which engage in the free recesses of the separating elements (3) and/or comb-like structures (5) pointing toward the interstices at the end and beginning of the container (1).

7. The system according to claim 6, **characterized in that** the gripper (10) has sensors (13, 14) for positioning the gripper (10) over the separating elements (10) for detecting the devices (6, 7, 8) for determining the location of each separating element (3) of the container (1).

8. The system according to claim 7, **characterized in that** the sensors (13, 14) emit a light beam and detect reflected light.

9. The system according to any of claims 6 to 8, **characterized in that** the system has a bank note-processing machine (100) with a singler (110), wherein the gripper (10) inserts bank notes removed from the container (1) into an input pocket of the singler (110).

10. The system according to claim 9, **characterized in that** a transport system (200) transports containers (1) filled with bank notes to the gripper (10) and after the emptying by the gripper (10) transports the containers (1) away from the gripper (10).

11. The system according to claim 10, **characterized in that** the transport system (200) crosses the bank note-processing machine (100) in the base region.

12. The system according to claim 10 or 11, **characterized in that** the transport system (200) has a vibrating station (260) to vibrate the containers (1) filled with bank notes so that all bank notes in the container (1) rest with one of their longitudinal edges on the bottom of the container (1).

## Revendications

1. Réservoir destiné au traitement de billets de banque se trouvant en particulier sous forme d'unités distinctes, comprenant un boîtier (2) fermé sur cinq côtés et ayant un côté ouvert pour la réception de billets de banque reposant sur leurs bords longitudinaux, **caractérisé en ce que** le réservoir (1) comprend des éléments de séparation (3) et est subdivisé et/ou peut être subdivisé variablement au moyen des éléments de séparation (3), cependant que les éléments de séparation (3) sont réalisés en méandres, de telle sorte qu'ils comportent des dégagements libres vers les espaces intermédiaires constitués entre eux, cependant que des éléments de séparation (3) similaires sont agencés aussi au début et à la fin du réservoir (1) ou le réservoir comporte aux parois parallèles aux éléments de séparation (3) des structures en peigne (5) qui, vers l'espace intermédiaire constitué avec l'élément de séparation (3) suivant, comportent des dégagements libres, cependant que les dégagements libres vers les espaces intermédiaires sont agencés pour qu'un préhenseur à structure en peigne s'y engrène afin d'enlever des billets de banque d'un espace intermédiaire du réservoir.

2. Réservoir selon la revendication 1, **caractérisé en ce que** le réservoir (1) comporte des subdivisions (4) pour la réception d'éléments de séparation (3).

3. Réservoir selon la revendication 1 ou 2, **caractérisé en ce que** le réservoir (1) et les éléments de séparation (3) comportent des équipements (6, 7, 8) pour la détermination de la position de chaque élément de séparation (3) à l'intérieur du réservoir (1) et de la présence de billets de banque dans le réservoir (1).

4. Réservoir selon la revendication 3, **caractérisé en ce que** des équipements (6, 7, 8) pour la détermination de la position de chaque élément de séparation (3) à l'intérieur du réservoir (1) et de la présence de billets de banque dans le réservoir (1) sont constitués par du matériau réfléchissant (6, 7) et par du matériau non réfléchissant (8), cependant que du matériau réfléchissant s'étend sur la surface interne du fond du réservoir (1) sur la longueur essentiellement totale de la surface interne du fond du réservoir (1), et les éléments de séparation (3) comportent du matériau non réfléchissant (8) dans au moins un dégagement libre dans la zone du matériau réfléchissant (6) du réservoir (1) ainsi que du matériau réfléchissant (7) dans au moins un dégagement libre dans la zone située à l'extérieur du matériau réfléchissant (6) du réservoir (1).

5. Réservoir selon une des revendications de 1 à 4, **caractérisé en ce que** le réservoir (1) et/ou l'élément de séparation (3) sont en matière plastique et sont fabriqués par moulage par injection.

6. Système destiné au traitement de billets de banque se trouvant en particulier sous forme d'unités distinctes, comprenant au moins un réservoir (1) selon une des revendications de 1 à 5, **caractérisé par** un préhenseur (10) pour l'enlèvement de billets de banque réceptionnés dans le réservoir (1), cependant que le préhenseur comporte des structures en peigne (11, 12) qui s'engrènent dans les dégagements libres, des éléments de séparation (3), tournés vers les espaces intermédiaires, ou dans les structures en peigne (5) situées au début et à la fin du réservoir (1).

7. Système selon la revendication 6, **caractérisé en ce que** le préhenseur (10) comporte des capteurs (13, 14) pour le positionnement du préhenseur (10) au-dessus des éléments de séparation (10), pour la détection des équipements (6, 7, 8) pour la détermination de la position de chaque élément de séparation (3) du réservoir (1).

8. Système selon la revendication 7, **caractérisé en ce que** les capteurs (13, 14) émettent un faisceau lumineux et détectent de la lumière réfléchie.

9. Système selon une des revendications de 6 à 8, **caractérisé en ce que** le système comporte une machine de traitement de billets de banque (100) ayant une déliasseuse (110), cependant que le préhenseur (10) place dans un casier d'alimentation de la déliasseuse (110) des billets de banque enlevés du réservoir (1).

10. Système selon la revendication 9, **caractérisé en ce qu'**un système de transport (200) transporte au préhenseur (10) des réservoirs (1) remplis de billets de banque, et évacue les réservoirs (1) depuis le préhenseur (10) après le vidage par le préhenseur (10).

11. Système selon la revendication 10, **caractérisé en ce que** le système de transport (200) croise la machine de traitement de billets de banque (100) dans la zone de socle.

12. Système selon la revendication 10 ou 11, **caractérisé en ce que** le système de transport (200) comporte une station de secouage (260) pour secouer les réservoirs (1) remplis de billets de banque afin que tous les billets de banque dans le réservoir (1) reposent par un de leurs bords longitudinaux.
